# EUROPEAN PATENT APPLICATION

(11) **EP 4 488 807 A1**
(43) Date of publication of application: **08.01.2025**
(21) Application number: 22929933.4
(22) Date of filing: 31.10.2022
(51) Int. Cl.: G06F 3/0346, G06F 3/03, G06F 3/042, G06F 3/04883, G06T 7/70

(54) **DISPLAY CONTROL SYSTEM FOR PAINTING**

(30) Priority: 04.03.2022 JP 2022033486
(71) Applicant: Teamlab Inc., Tokyo 101-0052 (JP)
(72) Inventor: INOKO, Toshiyuki, Tokyo 101-0052 (JP)
(74) Representative: Moser Götze & Partner Patentanwälte mbB
(86) International application number: PCT/JP2022/040770
(87) International publication number: WO 2023/166789

(57) **Abstract**

[Problem] To more reliably detect the contact position of an object on a display surface of a display device.

[Solution] This display control system 100 includes a display device 10 for displaying a video on a display surface that is three-dimensionally formed on a floor surface, a laser range scanner 20 for detecting the contact position of an object on the display surface of the display device 10, and an imaging device 30 disposed so as to acquire an image within a range that includes this display surface and the floor surface in the front of the display surface. The display control system 100 determines a position at which the object has contacted the display surface of the display device 10 on the basis of information relating to the contact position of the object detected by the laser range scanner 20 and the image acquired by the imaging device 30 and controls the display device 10 on the basis of the determined information.

## Description

### TECHNICAL FIELD

The present invention relates to a display control system for drawing. To describe it specifically, the display control system according to the present invention, for example, detects that a hand-held instrument for drawing has come into contact with a display surface of a display device to make it possible to display, on the display surface, an image of a line or a stamp in accordance with a contact position or a trajectory of the hand-held instrument.

### BACKGROUND ART

Conventionally, a system has been known that detects that a touch-pen that a user is grasping has come into contact with a screen or a large-sized display to display a trajectory of the touch-pen on, for example, the screen (Patent Literature 1).

In the system described in Patent Literature 1, for example, a projector is installed on a ceiling in front of the screen, and a plurality of infrared cameras or color cameras are installed at corners on an upper side of the screen to identify a position at which the touch-pen that the user is grasping has come into contact with the screen using the plurality of infrared cameras or color cameras. Furthermore, in the system, light-emitting diodes (LEDs) are mounted on the touch-pen, and the color cameras recognize a light emission color of the touch-pen to make it possible to switch a color of the displayed trajectory of the touch-pen on the screen.

### CITATION LIST

### PATENT LITERATURE

Patent Literature 1: Japanese Unexamined Patent Application Publication No. 2012-80950

### SUMMARY OF INVENTION

### TECHNICAL PROBLEM

When a plurality of cameras (infrared cameras or color cameras) installed at corners on an upper side of a screen detect a touch-pen, as in the system described in Patent Literature 1, the touch-pen is able to be detected only in a state where the touch-pen is in contact with or as close as possible to the screen. Therefore, when the touch-pen is in contact with the screen for a short period of time, the plurality of cameras may not be able to correctly detect the touch-pen, and they may erroneously detect a contact position of the touch-pen with respect to the screen or may not be able to detect that the touch-pen has come into contact with the screen in the first place. For example, when a user uses the touch-pen to draw a line, the touch-pen is in contact with the screen for a relatively long period of time, and thus the cameras easily detect the touch-pen. However, when the user uses the touch-pen to draw a point, the touch-pen is in contact with the screen for a short period of time, and thus the cameras may not be able to reliably detect a position at which the point is drawn.

Furthermore, in the system described in Patent Literature 1, the plurality of color cameras installed at the corners on the upper side of the screen recognize a light emission color of the LEDs attached to the touch-pen to switch a color of a displayed trajectory of the touch-pen on the screen. However, as described above, when the touch-pen is in contact with the screen for a short period of time, there has been an issue that the color cameras may not be able to reliably recognize a light emission color of the LEDs.

Then, a first object of the present invention is to make it possible to more reliably detect a contact position of an object on a display surface of a display device. Furthermore, a second object of the present invention is to make it possible to more accurately discriminate a type of the object that has come into contact with the display surface of the display device. The present invention has been provided to propose a solution to both of or at least either of the first and second objects.

### SOLUTION TO PROBLEM

The present invention relates to a display control system 100. The display control system 100 according to the present invention includes a display device 10, range measurement sensors 20, an imaging device 30, and a controller 40. The display device 10 displays a predetermined image on a display surface three-dimensionally formed with respect to a floor surface based on control information provided from the controller 40. The "display surface three-dimensionally formed with respect to the floor surface" here means that the display surface has only to be inclined with respect to the floor surface. It is not limited to a case where the display surface stands substantially vertically (90 degrees ± 10 degrees) with respect to the floor surface, and an inclination angle of the display surface with respect to the floor surface may range from 30 degrees to 120 degrees inclusive, for example. Furthermore, the display device 10 may be a combination of a projector and a screen, or may be a display device such as a liquid crystal display or an organic electroluminescent (EL) display. The range measurement sensors 20 are sensors that each detect a contact position of an object on the display surface of the display device 10. The "object" represents a physical object. Examples of the object include a part of a body, such as an arm of a user, and a hand-held instrument that the user is grasping. The imaging device 30 is disposed to acquire an image (including a still image and a moving image, the same applies to those described below) within a range that includes the display surface of the display device 10 and a space on a side of a front face of the display surface, specifically, a floor surface on the side of the front face of the display surface. That is, the imaging device 30 is disposed at a position on the side of the front face of the display surface and away at a certain distance from the display surface. The controller 40 determines a position at which the object has come into contact with the display surface of the display device 10 based on information relating to the contact position of the object, which is detected by each of the range measurement sensors 20, and the image acquired by the imaging device 30 to control the display device 10 based on information of the determination. That is, the controller 40 integrates the information of the detection by each of the range measurement sensors 20 and the image acquired by the imaging device 30 (specifically, information of analysis) with each other to determine the contact position of the object on the display surface. Based on information of the determination, the display device 10 displays a predetermined image at the contact position of the object on the display surface.

By utilizing, in addition to the information of the detection by each of the range measurement sensors 20, the image in which the space on the side of the front face of the display surface is captured, which is acquired by the imaging device 30, to determine the contact position of the object on the display surface, as in the configuration described above, it is possible to improve reliability of detecting the contact position of the object. That is, by further utilizing a fact that the imaging device 30 has captured the object before the object comes into contact with the display surface and the image acquired by the imaging device 30, it is possible to check that the object has come into contact with the display surface and to check the contact position with a certain degree of reliability. Furthermore, with the range measurement sensors 20, it is possible to accurately detect that the object has come into contact with the display surface and to accurately detect the contact position. Therefore, by combining pieces of the information acquired by each of the range measurement sensors 20 and the imaging device 30, it is possible to more reliably identify a fact that the object has come into contact with the display surface and the contact position even when the object is in contact with the display surface for a short period of time. For example, even when the object is in contact with the display surface for a short period of time, and the range measurement sensors 20 have not each accurately detected the contact position of the object on the display surface, it is possible to determine the contact position of the object by giving reliability priority over accuracy as long as the contact position of the object has been identified based on the image captured by the imaging device 30. Furthermore, in a case where the information of the detection by each of the range measurement sensors 20 is only available, when an object has once exited a range of the detection (specifically, on the display surface) by each of the range measurement sensors 20, and then the object has returned to the range of the detection, it is not possible to recognize that the identical object has come into contact with the display surface twice. On the other hand, when the imaging device 30 captures a space on the side of the front face of the display surface, as in the present invention, it is possible to recognize that an identical object has come into contact with the display surface twice. Therefore, it is possible to control a display screen, for example, joining a first contact position and a second contact position of an object to each other with a line.

The system according to the present invention may further include discrimination means that acquires, from the object, information used to discriminate a type of the object. The discrimination means may be the imaging device 30 described above or may be another device. In this case, the controller 40 discriminates the type of the object based on the information acquired by the discrimination means, and controls the display device 10 based on the information relating to the type of the object and the information of the determination described above. For example, it is possible to change a type or a color of an image displayed at the contact position of the object in accordance with the type of the object.

In the system according to the present invention, it is desirable that the discrimination means be the imaging device 30 described above. In this case, the controller 40 analyzes the image acquired by the imaging device 30 to discriminate the type of the object captured in the image. Therefore, the controller 40 is able to more reliably identify the type of the object that has come into contact with the display surface and a position on the display surface, at which the object has come into contact, from the image acquired by the imaging device 30 and the information of the detection by each of the range measurement sensors 20. Specifically, the controller 40 captures, based on the image acquired by the imaging device 30, the object before the object comes into contact with the display surface to discriminate the type of the object. When the object comes into contact with the display surface, the information of the detection by each of the range measurement sensors 20 and information acquired from the image acquired by the imaging device 30 are then integrated with each other to determine a position on the display surface, at which a certain type of the object has come into contact.

In the system according to the present invention, the object may include a light emission unit 51 that emits light in a pattern or a color that differs depending on the type. In this case, the controller 40 may analyze the light emission pattern or the color of the light emission unit 51 captured in the image to discriminate the type of the object captured in the image. As described above, when the object is caused to emit light, it is possible to easily discriminate the type of the object even inside a dark room.

In the system according to the present invention, it is desirable that the imaging device 30 be disposed on the side of the front face of the display surface of the display device 10 and at a position where a user of the system and the display surface are overlooked. For example, when it is assumed that the user is 100 cm to 200 cm inclusive tall, the imaging device 30 has only to be disposed at a position 200 cm or higher above the floor surface. Therefore, the imaging device 30 is able to easily capture an object.

One feature of the system according to the present invention is that the imaging device 30 is disposed to acquire an image within a range that includes the display surface of the display device 10 and the floor surface on the side of the front face of the display surface, as described above. As described above, expanding the range of imaging by the imaging device 30 to the floor surface on the side of the front face of the display surface makes it possible to easily capture the object before the object comes into contact with the display surface.

Next, another embodiment of the display control system according to the present invention will be described. A display control system 100 according to the other embodiment includes a display device 10, range measurement sensors 20, a discriminator 60, and a controller 40. The range measurement sensors 20 each detect a contact position of an object on a display surface of the display device 10. The discriminator 60 discriminates a type of the object, and acquires information used to identify a position of the object in a space. The controller 40 determines a position at which a certain type of the object has come into contact with the display surface of the display device 10 based on information relating to the contact position of the object, which is detected by each of the range measurement sensors 20, and information acquired by the discriminator 60 to control the display device 10 based on information of the determination. Examples of the discriminator 60 include one or more of a thermo-camera, a plurality of beacon receivers that receive electric waves emitted from a beacon tag provided to an object, and a plurality of microphones that receive sound waves emitted from a microphone provided to the object. Using the discriminator 60 described above also makes it possible to discriminate the contact position of the object on the display surface and the type of the object.

### ADVANTAGEOUS EFFECTS OF INVENTION

According to the present invention, it is possible to more reliably detect the contact position of the object on the display surface of the display device. Furthermore, according to the present invention, it is also possible to more accurately discriminate the type of the object that has come into contact with the display surface of the display device.

### BRIEF DESCRIPTION OF DRAWINGS

Fig. 1 schematically illustrates an entire configuration of a display control system according to a first embodiment of the present invention.
Fig. 2 schematically illustrates a situation when components of the display control system according to the first embodiment are seen from a side.
Fig. 3 illustrates an example of a block diagram of the display control system according to the first embodiment.
Fig. 4 illustrates examples of hand-held instruments (objects) used in the first embodiment.
Fig. 5 illustrates an example of a block diagram of a display control system according to a second embodiment.
Fig. 6 illustrates examples of combinations of discriminators and hand-held instruments (objects) used in the second embodiment.

### DESCRIPTION OF EMBODIMENTS

Embodiments of the present invention will be described below with reference to the drawings. The present invention is not limited to the embodiments described below, but includes those appropriately changed from the embodiments described below within the range obviously perceived by those skilled in the art.

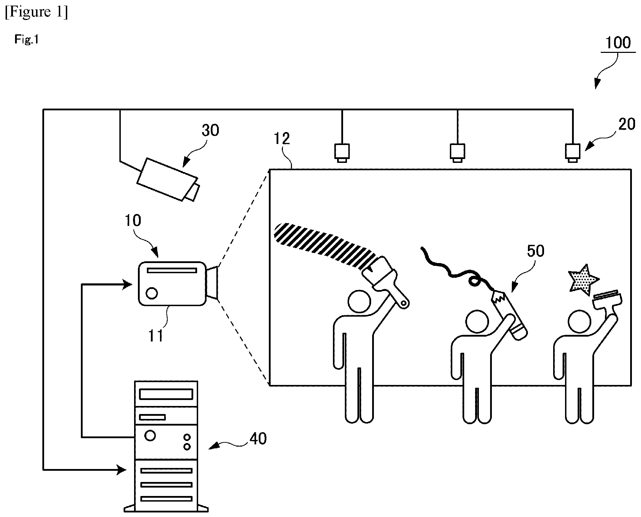

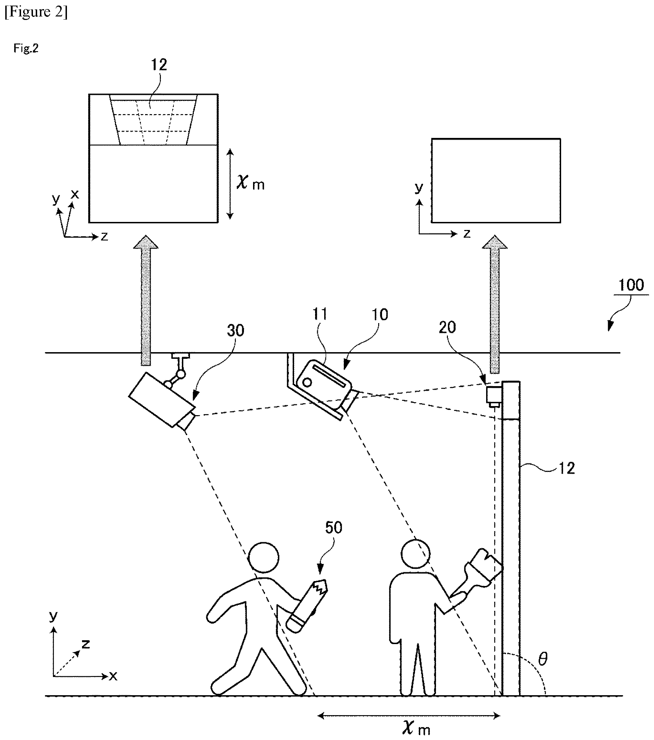

The present invention relates to a system that detects a contact position of an object on a display surface, and displays a predetermined image at the contact position. As illustrated in Figs. 1 and 2, a display control system 100 according to a first embodiment of the present invention includes a display device 10, range measurement sensors 20, an imaging device 30, and a controller 40. Pieces of information acquired by the range measurement sensors 20 and the imaging device 30 are inputted to the controller 40. The controller 40 utilizes the pieces of information acquired by the range measurement sensors 20 and the imaging device 30 to control the display device 10. Furthermore, users are grasping various types of hand-held instruments 50 (objects), and are able to utilize the hand-held instruments 50 to freely draw a character, a picture, and a figure on a display surface.

In the present embodiment, types and contact positions of the hand-held instruments 50 that have come into contact with a screen 12 are identified based on the pieces of information acquired by the range measurement sensors 20 and the imaging device 30. Then, for example, a line, a point, and a figure appear at the contact positions of the hand-held instruments 50 on the screen 12, respectively. Furthermore, types of the line, the point, the figure, and the like that appear on the screen change in accordance with the types of the hand-held instruments 50. In the example illustrated in Fig. 1, for example, the users are grasping a brush type instrument, a pen type instrument, and a stamp type instrument, respectively. On the screen 12, a thick line is displayed at a contact position of the brush type instrument, a thin line is displayed at a contact position of the pen type instrument, and a predetermined stamp figure is displayed at a contact position of the stamp type instrument. Furthermore, it is possible to change colors of the lines and figure in accordance with the types of the hand-held instruments 50. As described above, selecting and using a different hand-held instrument 50 allows a user to enjoy a change of a line or a figure displayed on the screen.

In the present embodiment, the display device 10 is configured to include a projector 11 that emits image light and the screen 12 (the display surface) onto which the image light is projected. The projector 11 is, for example, fixed to a ceiling surface at an upper position on a side of a front face of the screen 12 to emit image light from above toward the display surface on the screen 12. Note that it is possible to adopt, for the display device 10, a display surface of, for example, a liquid crystal display or an organic EL display instead of the projector 11 and the screen 12. The display surface of the screen 12, the display, or the like is three-dimensionally formed with respect to a floor surface, and is inclined at a predetermined angle θ with respect to the floor surface, as illustrated in Fig. 2. The inclination angle θ of the display surface with respect to the floor surface may range from 30 degrees to 120 degrees inclusive, desirably from 60 degrees to 115 degrees inclusive or from 70 degrees to 110 degrees inclusive, and particularly desirably from 80 degrees to 100 degrees inclusive, for example. Furthermore, it is ideal that the display surface stands vertically (at 90 degrees) with respect to the floor surface.

The range measurement sensors 20 are two-dimensional scanning type optical distance measuring sensors that emit inspection light (laser), scan the inspection light, and measure a distance and an angle with respect to a hand-held instrument 50. Pieces of information detected by the range measurement sensors 20 are transmitted to the controller 40. For example, the range measurement sensors 20 are disposed immediately above the screen 12 to emit inspection light along the screen 12. When positional coordinates of the range measurement sensors 20 in a real space are already known, measuring a distance and an angle with respect to an object that has come into contact with light emitted from the range measurement sensors 20 makes it possible to detect a positional coordinate of a hand-held instrument 50 in the real space. Specifically, since the inspection light is emitted along a surface of the screen 12, it is possible to detect information of a coordinate of a position at which a hand-held instrument 50 has come into contact with the screen 12. When the space where the screen 12 is disposed is represented by a three-dimensional coordinate system of xyz, as illustrated in Fig. 2, the range measurement sensors 20 serve a function of detecting a two-dimensional coordinate of a hand-held instrument 50 in a screen coordinate system on a yz plane. Note that, when the screen 12 is a large-sized screen, a plurality of the range measurement sensors 20 may be disposed to allow the whole screen 12 to serve as a range of detection.

The imaging device 30 is used to acquire, before a hand-held instrument 50 comes into contact with the screen 12, an image including the hand-held instrument 50 to identify a type and a position of the hand-held instrument 50. As the imaging device 30, it is possible to use a commonly available infrared camera or color camera. The imaging device 30 includes, for example, an imaging lens, a mechanical shutter, a shutter driver, a photoelectric conversion device such as a charge-coupled device (CCD) image sensor unit, a digital signal processor (DSP) that reads an amount of electric charges from the photoelectric conversion device to generate data of an image, and an integrated circuit (IC) memory. The data of the image acquired by the imaging device 30 is transmitted to the controller 40.

Furthermore, the imaging device 30 is, for example, fixed to the ceiling surface at the upper position on the side of the front face of the screen 12 to acquire, from a position where the screen 12 and the users near the screen 12 are overlooked, an image including the screen 12 and a space on the side of the front face of the screen 12. Specifically, as illustrated in Fig. 2, it is desirable that a range of imaging by the imaging device 30 include, in addition to the whole screen 12, the floor surface within a predetermined range on the side of the front face of the screen 12. For example, in Fig. 2, a length in a direction (an x-axis direction) orthogonal to a screen plane (the yz plane) included in the range of imaging by the imaging device 30 is represented by a symbol x. For example, the length x is desirably 0.5 m or longer, and particularly desirably 1 m or longer, 2 m or longer, or 3 m or longer. Although an upper limit of the length x is not particularly limited, the length x may be 10 m or shorter or 5 m or shorter, for example. As described above, including a space including the floor surface of the front face of the screen 12 in the range of imaging by the imaging device 30 makes it possible to capture, before a hand-held instrument 50 comes into contact with the screen 12, a position of the hand-held instrument 50 and to identify its type.

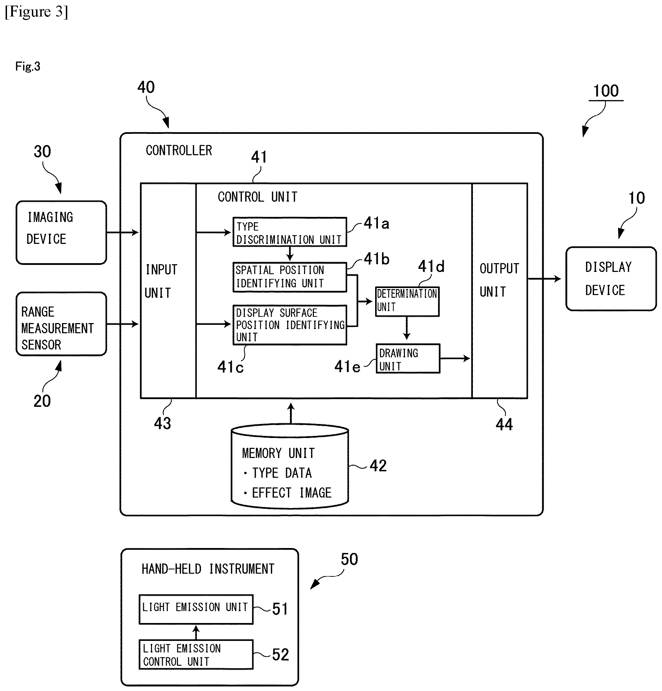

Fig. 3 mainly illustrates a functional configuration of the controller 40 according to the present embodiment. The controller 40 is a computer that controls the display device 10 based on the pieces of information provided from the range measurement sensors 20 and the imaging device 30. As the controller 40, it is possible to utilize a general-purpose computer. The controller 40 is basically connected in a wired manner to the display device 10, the range measurement sensors 20, and the imaging device 30 via local area network (LAN) cables, universal serial bus (USB) cables, a switching hub, and the like. However, the controller 40 may be connected to those components in a wireless manner via a wireless LAN or the Internet.

As illustrated in Fig. 3, the controller 40 includes a control unit 41, a memory unit 42, an input unit 43, and an output unit 44. As the control unit 41, it is possible to utilize a processor such as a central processing unit (CPU) or a graphics processing unit (GPU). The control unit 41 basically reads a program stored in the memory unit 42, deploys the program to a main memory, and executes predetermined arithmetic processing following the program. Furthermore, the control unit 41 is able to appropriately write and read a result of the arithmetic processing following the program into and from the memory unit 42. The memory unit 42 is an element that stores information used for arithmetic processing or the like in the control unit 41 and a result of the arithmetic processing. It is possible to achieve a storage function of the memory unit 42 by using a non-volatile memory such as a hard disc drive (HDD) or a solid state drive (SDD). Furthermore, the memory unit 42 may have a function to serve as a main memory for writing or reading those related to interim progress and the like of the arithmetic processing executed by the control unit 41. It is possible to achieve a memory function of the memory unit 42 by using a volatile memory such as a random access memory (RAM) or a dynamic random access memory (DRAM). The input unit 43 serves as an input-purpose interface for connecting to the range measurement sensors 20 and the imaging device 30. Furthermore, the output unit 44 serves as an output-purpose interface for connecting to the display device 10.

In the present embodiment, as illustrated in Fig. 3, the hand-held instruments 50 each include a light emission unit 51 and a light emission control unit 52. The light emission unit 51 includes light-emitting devices such as visible light LEDs and an infrared LED. The light emission unit 51 may include, for example, a red LED, a blue LED, and a green LED, and may further include a white LED if necessary to make it possible to adjust its light emission color. Furthermore, the infrared LED emits a near infrared ray having a wavelength ranging from approximately 700 nm to approximately 1500 nm inclusive. When an infrared LED is adopted as the light emission unit 51, an infrared camera including a light receiver that senses the near infrared ray has only to be adopted as the imaging device 30. Furthermore, the light emission control unit 52 serves as a control circuit that controls a light emission pattern (i.e., a blinking pattern) and a light emission color of the light emission unit 51. The light emission control unit 52 supplies electric power supplied from a battery (not illustrated) to the light emission unit 51, and adjusts light-emission intensity of the various LED elements to control a light emission color of the light emission unit 51 as a whole. Furthermore, the light emission control unit 52 adjusts turning on and off of the various LED elements to control the light emission pattern of the light emission unit 51. Various types of the hand-held instruments 50 are prepared beforehand. The hand-held instruments 50 are set such that both of or at least either of a light emission pattern and a light emission color differs from each other depending on the type.

Furthermore, Fig. 3 illustrates functional blocks of the control unit 41. The control unit 41 includes, as the functional blocks, a type discrimination unit 41a, a spatial position identifying unit 41b, a display surface position identifying unit 41c, a determination unit 41d, and a drawing unit 41e. The functional blocks 41a to 41e are each achieved as the control unit 41 (the processor) executes a predetermined program.

The type discrimination unit 41a analyzes the image acquired by the imaging device 30 to discriminate the type of each of the hand-held instruments 50 captured in the image. In the present embodiment, the hand-held instruments 50 are set such that a light emission pattern and/or a light emission color differs from each other depending on the type, as described above. Furthermore, the memory unit 42 stores data used to identify the type of each of the hand-held instruments 50 in association with information relating to the light emission pattern and/or the light emission color. Therefore, the type discrimination unit 41a analyzes the image acquired by the imaging device 30, identifies the light emission pattern and/or the light emission color of each of the hand-held instruments 50, and reads, from the memory unit 42, information relating to the type of each of the hand-held instruments 50, which corresponds to the identified light emission pattern and/or light emission color. Therefore, the type discrimination unit 41a is able to discriminate the type of each of the hand-held instruments 50.

To give an example, the type discrimination unit 41a is able to discriminate a red pen, a blue pen, a red brush, a blue brush, a red stamp, or a blue stamp depending on the hand-held instrument 50. For example, different light emission patterns are allocated to these types of the hand-held instruments 50, respectively, and are stored in the memory unit 42. In this case, analyzing the light emission pattern of each of the hand-held instruments 50 makes it possible to discriminate the type of each of the hand-held instruments 50. Specifically, analyzing the light emission pattern of each of the hand-held instruments 50 makes it possible to discriminate whether a red pen or a blue pen is used. In this case, since it is sufficient that it be possible to analyze the light emission pattern of each of the hand-held instruments 50, and it is not necessary to analyze the light emission color, an infrared camera is adoptable as the imaging device 30, instead of a color camera. Furthermore, it is possible to discriminate the type of each of the hand-held instruments 50 based on both the light emission pattern and the light emission color. For example, whether red or blue is used is discriminated based on the light emission color of each of the hand-held instruments 50. Furthermore, which of a pen, a brush, and a stamp is used is discriminated based on the light emission pattern of each of the hand-held instruments 50. As described above, information of both the light emission pattern and the light emission color may be utilized to discriminate the type of each of the hand-held instruments 50. However, since it is necessary to recognize the light emission color of each of the hand-held instruments 50 to utilize the light emission color for discriminating the type, it is necessary to use a color camera as the imaging device 30.

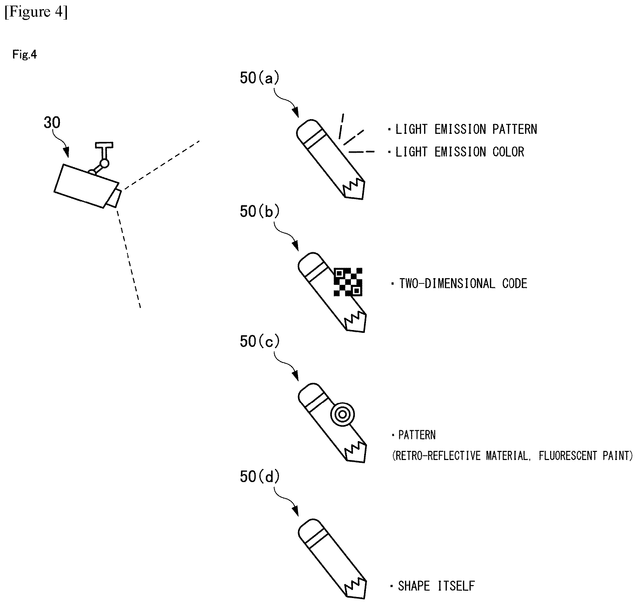

Furthermore, Fig. 4 illustrates various examples of methods of discriminating the type of each of the hand-held instruments 50. When a hand-held instrument 50(a) provided with a light emission unit such as LEDs is used, as described above, the type discrimination unit 41a has only to identify its type based on its light emission pattern and/or light emission color. Furthermore, it is also possible to use a hand-held instrument 50(b) provided with a two-dimensional code such as a quick response (QR) code (registered trademark) that differs depending on the type. In this case, the type discrimination unit 41a is able to analyze the two-dimensional code captured in a captured image and to read, from the memory unit 42, a type corresponding to identification information embedded in the two-dimensional code to discriminate the type of the hand-held instrument 50(b). Furthermore, it is also possible to use a hand-held instrument 50(c) provided with a pattern that differs depending on the type. The pattern is drawn with, for example, a retro-reflective material or a fluorescent paint to allow the pattern to be easily captured in an image captured by the imaging device 30. In this case, the type discrimination unit 41a is able to analyze the pattern captured in the captured image and to read, from the memory unit 42, a type corresponding to the pattern to discriminate the type of the hand-held instrument 50(c). Furthermore, it is also possible to use a hand-held instrument 50(d) that differs in shape itself depending on the type. In this case, the type discrimination unit 41a is able to analyze the shape of the hand-held instrument 50(d) captured in a captured image and to read, from the memory unit 42, a type corresponding to the shape to discriminate the type of the hand-held instrument 50(d).

The spatial position identifying unit 41b analyzes the image acquired by the imaging device 30 and roughly identifies, in a space, a position of a hand-held instrument 50 captured in the image. Particularly, when the type discrimination unit 41a executes processing, and the spatial position identifying unit 41b executes processing, it is possible to identify, in the space, a type and a position of a hand-held instrument 50. Note that, from an image captured by the imaging device 30, it is difficult to exactly identify a three-dimensional coordinate of a hand-held instrument 50. Therefore, the spatial position identifying unit 41b has only to be able to identify whether a certain type of a hand-held instrument 50 is present within a range contactable with the screen 12, for example. Particularly, it is desirable that the spatial position identifying unit 41b identify whether a certain type of a hand-held instrument 50 is in contact with the screen 12. Furthermore, it is desirable that the spatial position identifying unit 41b identify, with a certain degree of accuracy, a position at which a certain type of a hand-held instrument 50 is in contact with the screen 12. As in the example illustrated in Fig. 2, when the screen 12 captured in a captured image is divided into some regions (divided into nine regions in the illustrated example), the spatial position identifying unit 41b has only to be able to identify which region on the screen 12 a certain type of a hand-held instrument 50 is in contact with. Note that it is possible to further subdivide the divided regions on the screen 12, which improves accuracy of identifying a contact position in that case. As described above, the spatial position identifying unit 41b roughly identifies positions of one or a plurality of hand-held instruments 50 in a space captured in a captured image, specifically, contact positions on the screen 12.

The display surface position identifying unit 41c identifies a contact position of a hand-held instrument 50 with respect to the screen 12 (the display surface) based on information of detection by the range measurement sensors 20. The range measurement sensors 20 each detect a distance and an angle from each of the range measurement sensors 20 to the hand-held instrument 50 when a hand-held instrument 50 has come into contact with the screen 12, and each transmit the information of the detection to the display surface position identifying unit 41c. Since the positional coordinates of the range measurement sensors 20 are already known, the display surface position identifying unit 41c is able to identify a positional coordinate (a two-dimensional coordinate on the yz plane) of the hand-held instrument 50 on the screen 12 based on pieces of information relating to the distances and angles with respect to the hand-held instrument 50, which are received from the range measurement sensors 20.

The determination unit 41d integrates information relating to the position, in the space, of the certain type of the hand-held instrument 50, which is identified by the type discrimination unit 41a and the spatial position identifying unit 41b, and information relating to the position, on the screen 12, of the hand-held instrument 50, which is identified by the display surface position identifying unit 41c, with each other, and determines a position on the screen 12, at which the certain type of the hand-held instrument 50 has come into contact. Specifically, as described above, the processing executed by the type discrimination unit 41a and the spatial position identifying unit 41b makes it possible to identify what type of a hand-held instrument 50 is in contact with which range on the screen 12. Furthermore, processing executed by the display surface position identifying unit 41c makes it possible to identify a positional coordinate of the hand-held instrument 50 that is in contact with the screen 12. Therefore, as long as, at timing (within a predetermined period of time, for example, within 1 second) and within a range (within a predetermined range, for example, within 50 cm), substantially identical to those at and within which the type discrimination unit 41a and the spatial position identifying unit 41b identify a fact that a certain type of a hand-held instrument 50 has come into contact with the screen 12, the display surface position identifying unit 41c also detects that any hand-held instrument 50 is in contact with the screen 12, the determination unit 41d is able to estimate that a positional coordinate of the hand-held instrument 50, which the display surface position identifying unit 41c has identified, corresponds to a coordinate of a contact position of the hand-held instrument 50 of a type, which the type discrimination unit 41a and the spatial position identifying unit 41b have identified. That is, even when the range measurement sensors 20 themselves do not each have a function of identifying a type of a hand-held instrument 50, combining pieces of information of analysis of an image captured by the imaging device 30 makes it possible to identify a type of a hand-held instrument 50, which is detected by the range measurement sensors 20.

Furthermore, a situation is assumed where a period of time for which a hand-held instrument 50 is in contact with the screen 12 is short, and the display surface position identifying unit 41c is not able to accurately identify a contact position of the hand-held instrument 50 from information of detection by the range measurement sensors 20. Even when such a situation has occurred, on the other hand, there may be a case where the type determination unit 41a and the spatial position identifying unit 41b have been able to accurately identify a fact that a certain type of a hand-held instrument 50 has been in contact with the screen 12 and its contact position based on an image captured by the imaging device 30. That is, since the imaging device 30 is disposed at a bird's-eyes view position close to the ceiling and captures a hand-held instrument 50 before it comes into contact with the screen 12, analyzing an image captured by the imaging device 30 makes it possible to identify a fact that the hand-held instrument 50 has come into contact with the screen 12 and its position or range, even with a lower degree of accuracy than that when using the range measurement sensors 20. In this case, the determination unit 41d has only to determine a contact position of the hand-held instrument 50 on the screen 12 based on information provided from the type discrimination unit 41a and the spatial position identifying unit 41b. In this case, the determination unit 41d gives reliability priority over detection accuracy to determine the contact position of the hand-held instrument 50.

The drawing unit 41e draws an image corresponding to a type of a hand-held instrument 50 at a contact position of the hand-held instrument 50 on the screen 12, which is determined by the determination unit 41d. Specifically, the memory unit 42 stores data of effect images corresponding to types of hand-held instruments 50. The drawing unit 41e reads the data of the effect image depending on the type of the hand-held instrument 50 to draw the effect image at a contact position of the hand-held instrument 50. On the screen 12, as illustrated in Fig. 1, for example, a thick line is drawn at a contact position of a brush type instrument, a thin line is drawn at a contact position of a pen type instrument, and a predetermined stamp figure is drawn at a contact position of a stamp type instrument. The data of the image drawn by the drawing unit 41e is transmitted to the display device 10 via the output unit 44. The display device 10 outputs the data of the image. In the present embodiment, the projector 11 projects the image onto the screen 12 to display the image. Note that the drawing unit 41e is obviously able to draw a predetermined background image and the like, in addition to an effect image corresponding to a hand-held instrument 50, and to output the images to the display device 10.

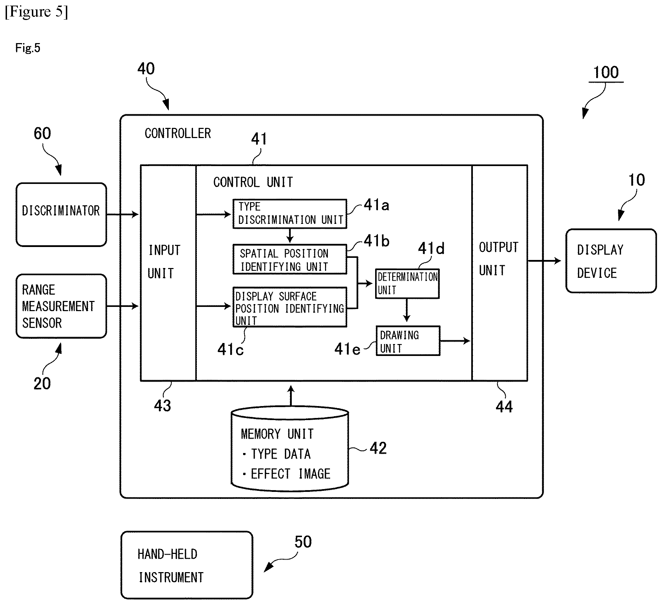

Fig. 5 illustrates a functional configuration of a display control system 100 according to a second embodiment of the present invention. For the second embodiment, identical reference numerals are used for identical components to those according to the first embodiment described above to omit descriptions of them, while focusing on providing descriptions for different components from those according to the first embodiment.

As illustrated in Fig. 5, the display control system 100 according to the second embodiment includes a discriminator 60, instead of the imaging device 30 according to the first embodiment. In the first embodiment, the imaging unit 30 mainly serves a function of discriminating a type of a hand-held instrument 50 (an object) and a function of identifying a spatial position of the hand-held instrument 50. In the second embodiment, however, the discriminator 60 serves these functions, instead of the imaging unit 30.

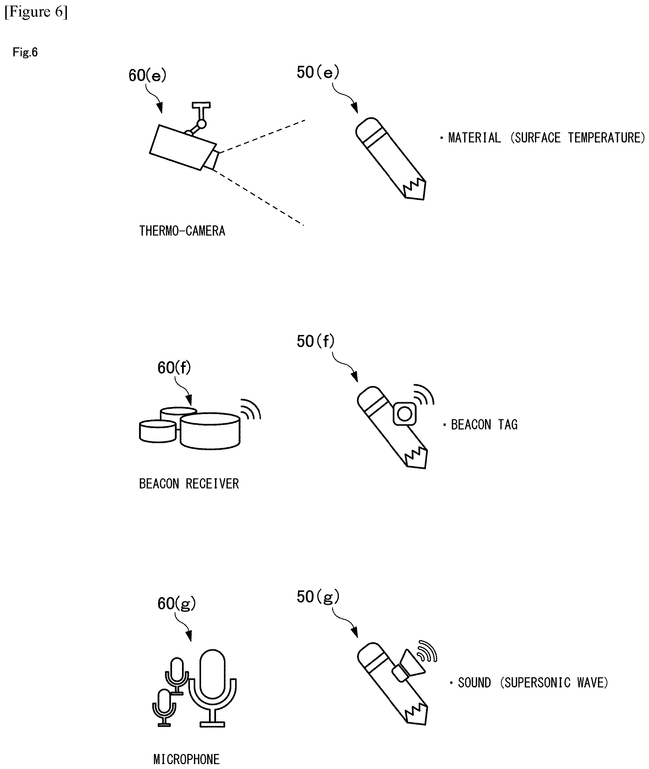

Fig. 6 illustrates examples of combinations of hand-held instruments 50 and the discriminators 60. For example, it is also possible to use, as the hand-held instrument 50, a hand-held instrument 50(e) formed of a material with a surface temperature that differs depending on the type. In this case, a thermo-camera 60(e) that is able to detect the surface temperature of the hand-held instrument 50(e) has only to be used as the discriminator 60. The type discrimination unit 41a is able to read, from the memory unit 42, based on the surface temperature of the hand-held instrument 50(e), which is detected by the thermo-camera 60(e), a type corresponding to the surface temperature to discriminate the type of the hand-held instrument 50(e). Furthermore, the spatial position identifying unit 41b is able to analyze an image captured by the thermo-camera 60(e) to identify a spatial position of the hand-held instrument 50(e), specifically, a contact position on the screen 12, with a certain degree of accuracy.

Furthermore, it is possible to use, as the hand-held instrument 50, a hand-held instrument 50(f) mounted with a beacon tag that emits electric waves including identification information that differs depending on the type. In this case, a plurality of beacon receivers 60(f) that receive electric waves emitted from the beacon tag has only to be used as the discriminator 60. The type discrimination unit 41a is able to read, from the memory unit 42, based on the identification information included in the electric waves that the beacon receivers 60(f) have received, a type corresponding to the identification information to discriminate the type of the hand-held instrument 50(f). Furthermore, the spatial position identifying unit 41b is able to measure, based on intensities of electric waves that three or more of the beacon receivers 60(f) have received, a distance from each of the beacon receivers 60(f) to the hand-held instrument 50(f) to identify, with a triangulation method, a spatial position of the hand-held instrument 50(f), specifically, a contact position on the screen 12, with a certain degree of accuracy.

Furthermore, it is also possible to use, as the hand-held instrument 50, a hand-held instrument 50(g) mounted with a speaker that outputs supersonic waves at a frequency that differs depending on the type. In this case, a plurality of microphones 60(g) that collect the supersonic waves emitted from the speaker has only to be used as the discriminator 60. The type discrimination unit 41a is able to read, from the memory unit 42, based on the frequency of the supersonic waves that the microphones 60(g) have collected, a type corresponding to the frequency to discriminate the type of the hand-held instrument 50(g). Furthermore, the spatial position identifying unit 41b is able to measure, based on intensities of the supersonic waves that three or more of the microphones (g) have received, a distance from each of the microphones 60(g) to the hand-held instrument 50(g) to identify, with the triangulation method, a spatial position of the hand-held instrument 50(g), specifically, a contact position on the screen 12, with a certain degree of accuracy.

In the present specification, the embodiments of the present invention have been described above with reference to the drawings to express the content of the present invention. However, the present invention is not limited to the embodiments described above, and includes modified embodiments and improved embodiments that are obviously perceived by those skilled in the art based on those described in the present specification.

### REFERENCE SIGNS LIST

- 10: Display device
- 11: Projector
- 12: Screen
- 20: Range measurement sensor
- 30: Imaging device
- 40: Controller
- 41: Control unit
- 41a: Type discrimination unit
- 41b: Spatial position identifying unit
- 41c: Display surface position identifying unit
- 41d: Determination unit
- 41e: Drawing unit
- 42: Memory unit
- 43: Input unit
- 44: Output unit
- 50: Hand-held instrument (object)
- 51: Light emission unit
- 52: Light emission control unit
- 60: Discriminator
- 100: Display control system

## Claims

1. A display control system comprising:
a display device (10) that displays an image on a display surface three-dimensionally formed with respect to a floor surface;
a range measurement sensor (20) that detects a contact position of an object on the display surface of the display device;
an imaging device (30) disposed to acquire an image within a range that includes the display surface of the display device and a floor surface on a side of a front face of the display surface; and
a controller (40) that determines a position at which the object has come into contact with the display surface of the display device based on information relating to the contact position of the object and the image to control the display device based on information of the determination, the contact position being detected by the range measurement sensor, the image being acquired by the imaging device.

2. The display control system according to claim 1, further comprising
discrimination means that acquires, from the object, information used to discriminate a type of the object,
wherein the controller (40) discriminates the type of the object based on the information acquired by the discrimination means, and controls the display device based on the information relating to the type of the object and the information of the determination.

3. The display control system according to claim 2, wherein
the discrimination means is the imaging device (30), and
the controller (40) analyzes the image to discriminate the type of the object captured in the image.

4. The display control system according to claim 2, wherein
the object includes a light emission unit (51) that emits light in a pattern or a color that differs depending on the type, and
the controller (40) analyzes the light emission pattern or the color of the light emission unit captured in the image to discriminate the type of the object captured in the image.
